# FASCICULE DE BREVET EUROPEEN

(11) **EP 1 844 686 B1**
(45) Date de publication et mention de la délivrance du brevet: **10.11.2010**
(21) Numéro de dépôt: 07356045.0
(22) Date de dépôt: 11.04.2007
(51) Int. Cl.: A47J 27/09

(54) **Appareil de cuisson sous pression à décompression maitrisée**
Druckkochgerät mit überwachter Dekompression
Pressure-cooking device with controlled decompression

(30) Priorité: 11.04.2006 FR 0603199
(43) Date de publication de la demande: 17.10.2007
(73) Titulaire: SEB S.A., 69132 Ecully Cedex (FR)
(72) Inventeur: Chameroy, Eric, 21260 Veronnes (FR); Anota, Daniel Jean-Marie, 21000 Dijon (FR)
(74) Mandataire: Martin, Didier Roland Valéry

(56) Documents cités:
- US-A- 5 724 884
- US-A1- 2005 139 089
- US-A1- 2006 054 026

## Description

La présente invention se rapporte au domaine technique général des appareils de cuisson d'aliments, en particulier de nature domestique, destinés à former une enceinte de cuisson étanche, au sein de laquelle sont cuits des aliments sous pression de vapeur.

La présente invention concerne plus particulièrement un appareil de cuisson d'aliments sous pression agencé pour former une enceinte de cuisson, pourvu d'un conduit permettant l'établissement d'un écoulement de fuite de vapeur de l'intérieur de l'enceinte vers l'extérieur et définissant une première section de passage de vapeur, ledit appareil comprenant un organe de réglage de la pression susceptible de présenter d'une part une configuration de régulation, dans laquelle il règle la première section de passage pour maintenir la pression régnant dans l'enceinte à un niveau prédéterminé, et d'autre part une configuration de décompression, dans laquelle il règle la première section de passage pour permettre, indépendamment du niveau de la pression régnant dans l'enceinte, la mise en communication de l'intérieur de l'enceinte avec l'extérieur, ledit conduit définissant en outre une seconde section de passage située à l'amont de la première section dans le sens de l'écoulement de fuite.

Les appareils de cuisson sous pression, en particulier à usage domestique, du genre autocuiseur, sont bien connus dans l'art antérieur. De tels appareils comprennent généralement une cuve et un couvercle destiné à être rapporté sur la cuve pour former une enceinte de cuisson hermétique au sein de laquelle sont placés les aliments à cuire.

Cette enceinte peut ainsi atteindre des pressions et températures élevées lorsque l'appareil est soumis à l'influence d'une source de chauffe.

De tels appareils sont en outre généralement pourvus d'une soupape de régulation permettant de maintenir la pression régnant au sein de l'enceinte à un niveau prédéterminé, habituellement désigné par l'appellation « *pression de fonctionnement* ».

Les effets conjugués des niveaux élevés de pression et de température atteints dans ces appareils connus permettent ainsi de réaliser une cuisson des aliments extrêmement rapide, tout en étant respectueuse des propriétés organoleptiques et nutritionnelles des aliments.

Afin que l'utilisateur puisse ouvrir le couvercle, il est nécessaire de décompresser au préalable l'appareil, la pression de fonctionnement étant en effet, du fait de son niveau élevé, incompatible avec une ouverture sécurisée, c'est à dire sans risque d'échappement brutal du couvercle sous l'effet de la pression.

Pour décompresser un appareil de cuisson conforme à l'art antérieur, il existe plusieurs façons de procéder.

Selon une première méthode, il est possible de placer l'appareil sous un jet d'eau froide. Une telle solution est cependant peu satisfaisante, car elle implique de mouiller abondamment la surface externe de l'appareil, avec tous les inconvénients que cela engendre pour l'utilisateur. Une telle méthode de décompression s'avère également relativement malaisée à exécuter par l'utilisateur, car elle nécessite le déplacement de l'appareil lourd et brûlant, avec tout l'inconfort et le risque afférents, vers un point d'eau.

En outre, une telle méthode peut conduire, pour certains appareils du moins, à une mise en dépression interne de l'appareil, qui empêche la séparation de la cuve et du couvercle.

Une méthode alternative consiste à agir sur la soupape de régulation de l'appareil, de façon à mettre en communication de manière forcée l'intérieur de l'enceinte avec l'extérieur.

On connaît ainsi des appareils pourvus d'une part d'un orifice circulaire ménagé dans le couvercle, et d'autre part d'une soupape de régulation à ressort comprenant une tête circulaire, de diamètre supérieur à celle de l'orifice et à partir de laquelle s'élève, à sa périphérie, un joint d'étanchéité annulaire. Le joint d'étanchéité annulaire est destiné à venir en appui étanche contre le couvercle sous l'action du ressort, de manière à entourer l'orifice et former ainsi avec la tête une chambre hermétique coiffant l'orifice pour empêcher toute fuite de vapeur vers l'extérieur. Lorsque la pression régnant dans l'enceinte dépasse une valeur prédéterminée, la tête et son joint sont repoussés à distance de l'orifice, contre l'action du ressort, ce qui permet ainsi une régulation automatique de la pression régnant dans l'enceinte.

Ces appareils connus sont également dotés d'un moyen de manoeuvre de la soupape de régulation permettant, quel que soit le niveau de pression régnant dans l'enceinte, de forcer la soupape dans une position d'ouverture, dans laquelle la tête et son joint sont repoussés à distance de l'orifice, ce qui permet la décompression de l'appareil.

Ces appareils connus permettent ainsi de remplir une double fonction à l'aide de la soupape de régulation, savoir une fonction de régulation proprement dite et une fonction de décompression.

Un tel appareil est connu du document US 2006/054026.

Afin d'obtenir une bonne qualité de régulation, il est nécessaire que la soupape de régulation soit extrêmement sensible à l'évolution de la pression au sein de l'enceinte, de manière à pouvoir réagir rapidement à d'éventuelles fluctuations de pression à l'intérieur de l'enceinte. A cette fin, il est nécessaire que la surface de la portée de la soupape, c'est-à-dire la surface d'échange de pression entre la soupape et l'intérieur de l'enceinte, soit la plus grande possible. Cela signifie que la tête de soupape doit présenter un diamètre le plus important possible, dans la limite des contraintes d'encombrement et de faisabilité technique.

Toutefois, la mise en oeuvre d'une surface de portée importante, c'est-à-dire d'une tête de soupape présentant un diamètre important, génère des inconvénients non négligeables en ce qui concerne la décompression. En effet, afin de garantir une décompression complète et compte-tenu des tolérances de fabrication des différentes pièces en jeu, il est nécessaire d'écarter la tête de l'orifice d'une distance relativement importante. Or, la conjugaison d'une grande distance d'écartement avec un diamètre important de la tête conduit à mettre en place une section de fuite particulièrement importante lors de la décompression.

La libération d'une section de fuite importante permet certes une décompression rapide, en générant un débit important de vapeur. Cependant, ce débit de vapeur et la chute de pression afférente sont si importants et brusques que cela peut générer un phénomène de moussage des aliments contenus dans le récipient (phénomène parfois également désigné dans le métier par le terme « *émulsion* ») qui conduit à une éjection violente, par l'orifice, d'eau et/ou d'aliments brûlants.

Afin d'éviter l'apparition d'un tel phénomène désagréable et dangereux, les appareils connus mettent donc en oeuvre soit un orifice de section réduite, ce qui nuit à la sensibilité de décompression, soit des éléments de protection, du genre crépine, qui perturbent l'écoulement tant en décompression qu'en régulation.

Il existe donc un besoin pour un appareil de cuisson sous pression qui permette à la fois une excellente qualité de régulation et une excellente maîtrise de la décompression, sans sacrifier l'une ou l'autre de ces deux fonctions.

Les objets assignés à l'invention visent en conséquence à proposer un nouvel appareil de cuisson d'aliments sous pression portant remède aux différents inconvénients de l'art antérieur énumérés précédemment et qui offre un excellent compromis entre la qualité de régulation d'une part et l'efficacité et la sûreté de décompression d'autre part, tout en étant de conception très simple et économique.

Un autre objet de l'invention vise à proposer un nouvel appareil de cuisson d'aliments sous pression permettant, lors de sa décompression, de limiter efficacement les perturbations du flux de fuite de vapeur.

Un autre objet de l'invention vise à proposer un nouvel appareil de cuisson d'aliments sous pression de construction particulièrement compacte.

Un autre objet de l'invention vise à proposer un nouvel appareil de cuisson d'aliments sous pression de construction particulièrement simplifiée autorisant un fonctionnement très fiable.

Un autre objet de l'invention vise à proposer un nouvel appareil de cuisson d'aliments sous pression dont la conception repose sur des principes éprouvés.

Un autre objet de l'invention vise à proposer un nouvel appareil de cuisson d'aliments sous pression qui est capable d'assurer une régulation de pression particulièrement fine.

Un autre objet de l'invention vise à proposer un nouvel appareil de cuisson d'aliments sous pression permettant un excellent contrôle du flux de décompression.

Un autre objet de l'invention vise à proposer un nouvel appareil de cuisson d'aliments sous pression construit à partir d'un nombre minimum de pièces.

Un autre objet de l'invention vise à proposer un nouvel appareil domestique de cuisson d'aliments sous pression dont la décompression est particulièrement rapide et sécurisée, tout en présentant une excellente sensibilité de régulation.

Les objets assignés à l'invention sont atteints à l'aide d'un appareil de cuisson d'aliments sous pression agencé pour former une enceinte de cuisson, pourvu d'un conduit permettant l'établissement d'un écoulement de fuite de vapeur de l'intérieur de l'enceinte vers l'extérieur et définissant une première section de passage de vapeur, ledit appareil comprenant un organe de réglage de la pression susceptible de présenter d'une part une configuration de régulation, dans laquelle il règle la première section de passage pour maintenir la pression régnant dans l'enceinte à un niveau prédéterminé, et d'autre part une configuration de décompression, dans laquelle il règle la première section de passage pour permettre, indépendamment du niveau de la pression régnant dans l'enceinte, la mise en communication de l'intérieur de l'enceinte avec l'extérieur, ledit conduit définissant en outre une seconde section de passage située à l'amont de la première section dans le sens de l'écoulement de fuite, ledit appareil étant caractérisé en ce qu'il comprend un moyen d'ajustement de la deuxième section de passage conçu pour que cette dernière présente, lorsque l'organe de réglage est en configuration de régulation, une première valeur et, lorsque l'organe de réglage est en configuration de décompression, une deuxième valeur sensiblement inférieure à la première valeur.

D'autres particularités et avantages de l'invention apparaîtront et ressortiront plus en détails à la lecture de la description faite ci-après, en référence aux dessins, annexés donnés à titre purement illustratif et non limitatif, dans lesquels :
- la figure 1 illustre, selon une vue générale éclatée en perspective, un appareil de cuisson conforme à l'invention.
- La figure 2 illustre, selon une vue schématique en perspective, le couvercle de l'appareil de la figure 1.
- La figure 3 illustre, selon des vues (de haut en bas) de dessous, de côté et de dessus, un module de commande incorporant l'organe de réglage de pression de l'appareil et destiné à être rapporté et fixé de façon amovible sur le couvercle illustré à la figure 2.
- La figure 4 illustre, selon une vue schématique en perspective, un détail de réalisation en coupe du module représenté à la figure 3.
- La figure 5 représente un détail de l'organe de réglage de la pression, lorsque ce dernier présente sa configuration de régulation.
- La figure 6 représente un détail de l'organe de réglage de la pression, lorsque ce dernier présente sa configuration de décompression.

L'appareil de cuisson d'aliments 1 sous pression conforme à l'invention est destiné à assurer la cuisson de différents aliments, sous pression de vapeur, de préférence dans un contexte domestique.

De façon préférentielle, l'appareil de cuisson 1 conforme à l'invention est constitué par un autocuiseur domestique. Pour des raisons de simplicité de description, il sera exclusivement fait référence dans ce qui suit, en relation avec les dessins annexés, à un appareil 1 constitué par un autocuiseur domestique, étant entendu que l'invention peut également éventuellement concerner des appareils de type professionnel ou semi-professionnel.

De façon classique, l'appareil 1 conforme à l'invention est agencé pour former une enceinte de cuisson, laquelle est de préférence sensiblement étanche et destinée à être soumise à l'action d'une source de chauffe, que cette dernière soit externe (par exemple : plaque de cuisson) ou interne (par exemple : résistance électrique embarquée).

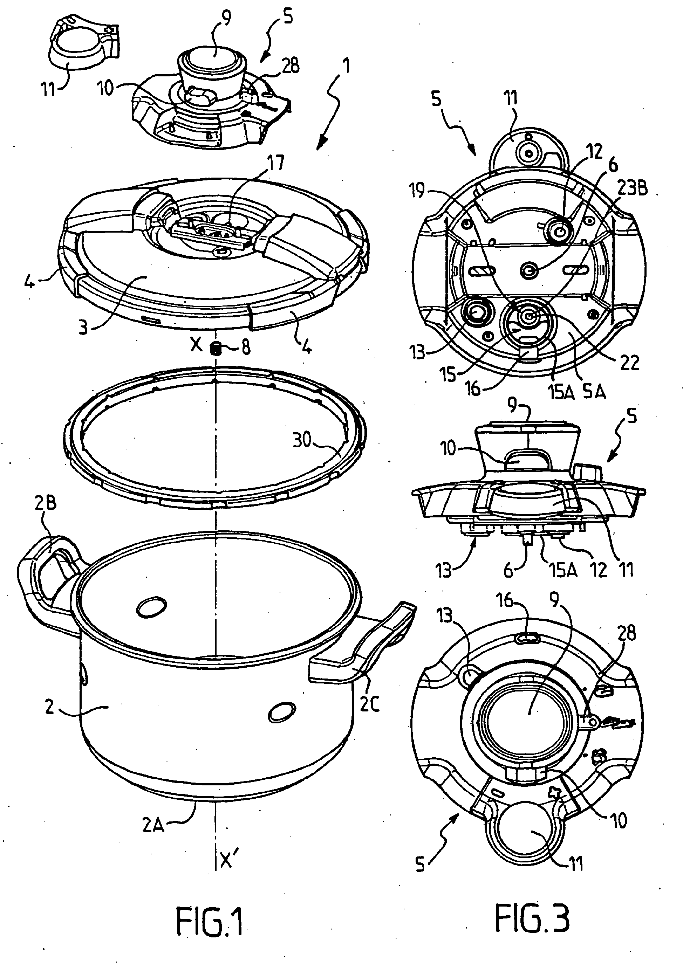

Avantageusement, l'appareil de cuisson 1 conforme à l'invention comprend une cuve 2 formant récipient de cuisson et présentant de façon préférentielle sensiblement une symétrie de révolution selon un axe X-X' (cf. figure 1). Par la suite, l'adjectif « *axial* » se réfèrera à la direction de cet axe de symétrie X-X', direction qui s'apparente à la direction verticale lorsque l'appareil est en fonctionnement normal. Bien évidemment, la forme de la cuve 2 peut ne pas être une forme de révolution (par exemple une forme ovale), sans que l'on sorte du cadre de l'invention. La cuve 2 est de manière classique fabriquée à partir d'un matériau métallique tel que de l'acier inoxydable ou de l'aluminium, et est préférentiellement pourvue d'un fond thermo-conducteur 2A solidarisé à la cuve 2 par exemple par frappe à chaud.

La cuve 2 peut également comporter un organe de préhension, formé par exemple par une ou plusieurs poignée(s) 2B, 2C, lesquelles sont préférentiellement au nombre de deux et fixées sur la cuve 2 de façon diamétralement opposée.

L'appareil 1 conforme à l'invention comprend également avantageusement un couvercle 3 destiné à être rapporté et verrouillé sur la cuve 2 pour former avec cette dernière, en coopération avec un joint d'étanchéité 30, l'enceinte de cuisson. La cuve 2 et le couvercle 3 sont conçus de façon que l'enceinte qu'ils forment soit suffisamment hermétique pour permettre une montée en pression de l'appareil.

Le couvercle 3, dont la forme est de préférence complémentaire à celle de la cuve 2 et par exemple est sensiblement discoïde, comprend d'une part une face interne 3A destinée à se trouver en regard de la cuve 2 lorsque le couvercle est verrouillé sur cette dernière, et d'autre part une face externe 3B opposée à ladite face interne 3A, ladite face externe 3B étant destinée à être orientée vers l'extérieur de la cuve 2, lorsque la cuve 2 et le couvercle 3 forment l'enceinte de cuisson. Le couvercle 3 peut être verrouillé ou déverrouillé sur la cuve 2 grâce à un moyen de verrouillage / déverrouillage 4. Ce dernier peut être de tout type connu de l'homme du métier, et par exemple être constitué d'un système à mâchoires (correspondant à la variante représentée aux figures), à segments, à baïonnettes ou encore à étriers, cette liste n'étant nullement limitative.

De façon purement optionnelle mais préférentielle, tel que cela est illustré aux figures, l'appareil 1 comprend un module de commande 5 destiné à être rapporté sur le couvercle 3, de préférence de façon amovible, grâce à un axe fileté 6 coopérant avec un trou 7 ménagé dans le couvercle 3 et un écrou de blocage 8 destiné à être vissé sur l'axe fileté 6.

Dans la variante illustrée aux figures, le module 5 embarque une série d'organes de fonctionnement et de sécurité, tels que deux boutons de commande 9, 10 commandant respectivement la fermeture et l'ouverture du moyen de verrouillage / déverrouillage 4, un minuteur amovible 11, une soupape de sécurité à la surpression 12, ainsi qu'un doigt coulissant 13 permettant d'une part d'empêcher l'appareil de monter en pression en cas de mauvaise fermeture du couvercle, et d'autre part d'empêcher l'ouverture du couvercle tant que la pression régnant dans l'appareil est incompatible avec la sécurité de l'utilisateur. Ces différents organes de commande et de sécurité sont bien connus en tant que tels et ne seront donc pas décrits plus en détails ici.

Conformément à l'invention, l'appareil 1 est pourvu d'un conduit 14 permettant l'établissement d'un écoulement de fuite de vapeur de l'intérieur de l'enceinte vers l'extérieur. Selon la conception mise en oeuvre dans la variante illustrée aux figures, le conduit 14 s'étend à partir du couvercle 3 et se poursuit au sein du module 5 jusque vers l'extérieur de l'appareil 1. Ainsi, de manière préférentielle, le module 5 comprend un fond 5A destiné à être plaqué contre la face supérieure 3B du couvercle 3. Sur le fond 5A est ménagée une chambre 15 délimitée latéralement par un joint d'étanchéité annulaire 15A s'élevant à partir du fond 5A et entourant le volume intérieur délimité par ladite chambre 15. La chambre 15 communique avec un tuyau d'évacuation 16. Lorsque le module 5 est rapporté et fixé sur le couvercle 3, le joint d'étanchéité 15A vient en appui étanche contre la face supérieure 3B du couvercle 3, de manière à entourer un orifice traversant 17 ménagé dans toute l'épaisseur du couvercle 3. Ainsi, lorsque le module 5 est mis en place sur le couvercle 3, la chambre 15 est mise en communication étanche d'une part avec l'intérieur de l'enceinte par l'intermédiaire de l'orifice 17, et d'autre part avec l'extérieur de l'appareil par l'intermédiaire du tuyau d'évacuation 16, la chambre 15 étant interposée entre l'orifice 17 et le tuyau d'évacuation 16. L'orifice 17 forme ainsi un orifice de mise en communication de l'intérieur de l'enceinte avec le conduit 14. Le conduit 14 est quant à lui formé, dans ce mode de réalisation particulier, par la juxtaposition et la mise en communication mutuelle de l'orifice 17, de la chambre 15 et du tuyau d'évacuation 16.

Bien évidemment, cet exemple de réalisation du conduit 14 n'est pas limitatif, et il est tout à fait envisageable que le conduit 14 soit réalisé d'une autre manière, en particulier dans le cas où l'appareil n'adopte pas une conception mettant en oeuvre un module amovible, telle que celle illustrée aux figures.

Conformément à l'invention, le conduit 14 définit une première section 18 de passage de vapeur, section 18 par laquelle passe la vapeur contenue dans l'enceinte pour s'échapper vers l'extérieur.

Le terme « *vapeur* » doit être pris ici dans un sens général, c'est-à-dire comme désignant la phase gazeuse ou pseudo-gazeuse présente au sein de l'enceinte de cuisson et cohabitant avec les aliments et le liquide de cuisson.

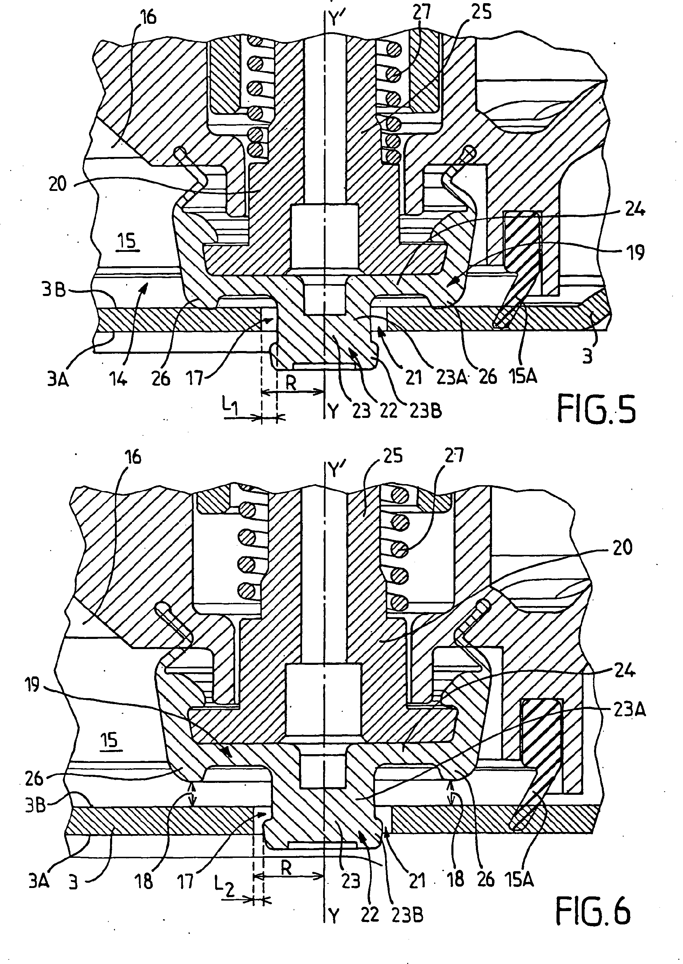

Conformément à l'invention, l'appareil 1 comprend un organe de réglage 19 de la pression susceptible de présenter une configuration de régulation (illustrée à la figure 5) dans laquelle il règle la première section 18 pour maintenir la pression régnant dans l'enceinte à un niveau prédéterminé, correspondant à la pression de fonctionnement. Par exemple, le niveau prédéterminé de pression est de préférence sensiblement compris entre 55 et 90 kPa.

En d'autres termes, l'organe de réglage 19 de la pression est conçu pour ajuster la taille de la première section 18 en fonction de la pression instantanée régnant dans l'enceinte pour :
- soit autoriser une fuite de vapeur par la première section 18 si la pression instantanée est supérieure au niveau prédéterminé,
- soit empêcher toute fuite de vapeur par la première section 18 si la pression instantanée régnant dans l'enceinte est inférieure au niveau prédéterminé, de façon à permettre la montée (ou la limitation) en pression de l'appareil 1.

De manière préférentielle et connue en tant que telle, l'organe de réglage 19 de la pression comprend une soupape 20 qui, lorsque l'organe de réglage est en configuration de régulation, d'une part obture (c'est-à-dire annule) la première section de passage 18 tant que la pression régnant dans l'enceinte est inférieure ou égale audit niveau prédéterminé, et d'autre part libère ladite première section (c'est-à-dire lui confère une valeur non nulle) dès que la pression régnant dans l'enceinte dépasse ledit niveau prédéterminé. En d'autres termes, la soupape 20 est conçue pour, lorsqu'elle se trouve en configuration de régulation, d'une part interdire toute communication de l'intérieur de l'enceinte avec l'extérieur tant que la pression régnant dans l'enceinte est inférieure ou égale au niveau prédéterminé et d'autre part mettre automatiquement en communication, sous l'effet de la pression, l'intérieur de l'enceinte avec l'extérieur dès que la pression régnant dans l'enceinte dépasse ledit niveau prédéterminé.

Conformément à l'invention, l'organe de réglage 19 est également susceptible de présenter une configuration de décompression (illustrée à la figure 6) dans laquelle il règle la première section de passage 18 pour permettre, indépendamment de la pression régnant dans l'enceinte, la mise en communication de l'intérieur de l'enceinte avec l'extérieur. En d'autres termes, lorsqu'il est dans sa configuration de décompression, l'organe de réglage 19 confère à la première section 18 une valeur non nulle, maintenue de façon sensiblement permanente (même si la pression régnant dans l'enceinte devient inférieure ou égale au niveau prédéterminé), pour permettre la décompression de l'appareil 1, c'est-à-dire l'équilibrage de la pression interne régnant dans l'enceinte de cuisson avec la pression atmosphérique régnant à l'extérieur de l'enceinte.

Dans le cas préférentiel illustré aux figures où l'organe de réglage de la pression 19 comprend une soupape 20, cette dernière libère donc la première section de passage 18 lorsque l'organe de réglage 19 est en configuration de décompression. Cela signifie que la soupape 20 confère à la première section 18 une valeur non nulle, de préférence prédéterminée, permettant l'établissement d'un flux de fuite de vapeur conduisant à la décompression de l'enceinte.

Conformément à l'invention, le conduit 14 définit en outre une seconde section de passage 21 située à l'amont de la première section de passage 18 dans le sens l'écoulement de fuite (c'est-à-dire de l'intérieur de l'enceinte vers l'extérieur). En d'autres termes, la vapeur contenue dans l'enceinte de cuisson passera, lorsqu'elle s'échappera vers l'extérieur de l'appareil 1 par le conduit 14, tout d'abord par la seconde section de passage 21 puis par la première section de passage 18, lesdites première et deuxième sections 18, 21 étant préférentiellement distinctes et situées à distance l'une de l'autre, comme cela est illustré aux figures.

Conformément à l'invention, l'appareil 1 comprend un moyen d'ajustement 22 de la deuxième section de passage 21 conçu pour que ladite deuxième section de passage 21 présente, lorsque l'organe de réglage 19 est en configuration de régulation (cf. figure 5), une première valeur et, lorsque l'organe de réglage est en configuration de décompression (cf. figure 6), une deuxième valeur sensiblement inférieure à la première valeur. En d'autres termes, au passage de l'organe de réglage 19 de sa configuration de régulation à sa configuration de décompression correspond une diminution de la deuxième section de passage 21, qui passe d'une première valeur à une deuxième valeur sensiblement inférieure à la première valeur.

Le principe général de l'invention repose donc sur le pilotage de la valeur d'une deuxième section de passage 21 située à l'amont de la première section de passage 18 sur laquelle agit l'organe de réglage 19 de la pression. Plus précisément, l'invention repose sur la mise en oeuvre d'une section de passage amont 21 plus importante lorsque l'organe de réglage 19 est en configuration de régulation que lorsque ce dernier est en position de décompression. Cela permet à la fois une grande sensibilité de régulation, en optimisant l'échange de pression entre l'organe de réglage 19 et l'intérieur de l'enceinte, ainsi qu'un contrôle optimal de la vitesse du flux de fuite lorsque l'organe de réglage 19 est en configuration de décompression, la restriction de la section de passage amont 21 permettant d'éviter les projections de vapeur et/ou de matière alimentaire brûlante par le conduit 14.

Avantageusement, la deuxième section de passage 21 est située sensiblement vers, et de préférence à, l'interface entre l'enceinte et le conduit 14. En d'autres termes, la deuxième section de passage 21 définie par le conduit 14 est préférentiellement située le plus à l'amont possible dudit conduit 14, en regard du sens de l'écoulement de fuite, c'est-à-dire que la vapeur contenue dans l'enceinte entre dans le conduit 14 en passant en premier lieu par la deuxième section 21. Cette mesure technique permet de générer une restriction du débit du flux de fluide de vapeur au plus près de l'intérieur de l'enceinte, ce qui permet de minimiser les perturbations d'écoulement du flux et de conserver ainsi un écoulement sensiblement constant et maîtrisé lors de la décompression.

Avantageusement, le moyen d'ajustement 22 de la deuxième section de passage 21 est relié fonctionnellement à l'organe de réglage 19 de la pression régnant à l'intérieur de l'enceinte, de façon que le passage de l'organe de réglage 19 de sa configuration de régulation à sa configuration de décompression entraîne la diminution de la valeur de la deuxième section de passage 21, de sa première valeur à sa deuxième valeur, et réciproquement.

De façon encore plus préférentielle, le moyen d'ajustement 22 de la deuxième section de passage 21 est porté par l'organe de réglage 19 de la pression, tel que cela est illustré aux figures. Cela permet ainsi, à l'aide d'un unique sous-ensemble particulièrement compact formé par l'organe de réglage 19 et le moyen d'ajustement 22, d'assurer de nombreuses fonctions, et notamment une fonction de régulation, une fonction de décompression, et une fonction de réglage de la taille de la deuxième section de passage 21.

Avantageusement, le moyen d'ajustement 22 de la deuxième section de passage 21 comprend un corps allongé 23. Ce dernier est de préférence de forme cylindrique, et présente un premier tronçon 23A et un deuxième tronçon 23B de section supérieure à celle du premier tronçon 23A. Le corps allongé 23 est de préférence monté à coulissement coaxialement à l'orifice 17 de mise en communication de l'intérieur de l'enceinte avec le conduit 14, de façon que lorsque l'organe de réglage 19 est en configuration de régulation, la deuxième section de passage 21, qui présente alors sa première valeur, est définie par la coopération du premier tronçon 23A et de l'orifice 17 (tel que cela est illustré à la figure 5), tandis que lorsque l'organe de réglage 19 est en configuration de décompression, la deuxième section de passage 21, qui présente alors sa deuxième valeur, est définie par la coopération du deuxième tronçon 23B et l'orifice 17 (tel que cela est illustré à la figure 6).

Dans le mode de réalisation illustré aux figures, l'orifice 17 de mise en communication de l'intérieur de l'enceinte avec le conduit 14 présente une forme circulaire, c'est-à-dire qu'il s'étend à travers l'épaisseur du couvercle 3, entre la face externe 3B et la face interne 3A de ce dernier selon un contour cylindrique à base circulaire d'axe de symétrie Y-Y', parallèle à l'axe X-X'. Le corps allongé 23 est avantageusement monté à translation selon l'axe Y-Y', de telle sorte qu'il pénètre dans l'orifice 17 concentriquement à ce dernier. Le premier tronçon 23A et le deuxième tronçon 23B sont positionnés dans le prolongement l'un de l'autre et séparés par un épaulement, le premier tronçon 23A et le deuxième tronçon 23B présentant de préférence une symétrie de révolution autour de l'axe Y-Y'. Le premier tronçon 23A présente un encombrement radial inférieur à celui du deuxième tronçon 23B, c'est-à-dire que le diamètre maximal présenté par le premier tronçon 23A est inférieur à celui présenté par le deuxième tronçon 23B. Ainsi, dans le cas du mode de réalisation illustré aux figures, la deuxième section de passage 21 présente une forme de couronne circulaire délimitée intérieurement par le premier tronçon 23A (ou le deuxième tronçon 23B selon la configuration adoptée par le moyen de réglage 19) et extérieurement par le contour de l'orifice 17.

Dans l'exemple illustré aux figures, la première valeur S₁ présentée par la deuxième section de passage 21 peut donc être obtenue par la formule : S₁ = π L₁ (2R - L₁) où R est le rayon de l'orifice 17 et L₁ est la largeur de l'espace interstitiel annulaire délimité par l'orifice 17 et le premier tronçon 23A. De la même façon, la deuxième valeur S₂ de la deuxième section de passage 21 peut être obtenue par la formule : S₂ = π L₂ (2R - L₂) où R est le rayon de l'orifice 17 et L₂ est la largeur de l'espace interstitiel annulaire délimité par l'orifice 17 et le deuxième tronçon 23B.

Avantageusement, lorsque l'organe de réglage 19 est en configuration de régulation et qu'il libère la première section 18, afin de ramener la pression régnant dans l'enceinte au niveau prédéterminé correspondant à la pression de fonctionnement, la première section de passage 18 présente une valeur qui n'excède sensiblement pas la première valeur de la deuxième section de passage 21. En d'autres termes, lorsque l'organe de réglage 19 libère la première section 18 alors qu'il est en configuration de régulation, la deuxième section de passage 21, qui présente alors sa première valeur, est supérieure à la première section 18 libérée par la soupape 20. Cette mesure technique évite tout phénomène intempestif de remontée en pression au sein du conduit 14 pendant la régulation, qui pourrait nuire à la précision et à la rapidité de cette dernière.

Avantageusement, lorsque l'organe de réglage 19 est en configuration de décompression, la première section de passage 18 présente une valeur qui excède sensiblement la deuxième valeur de la deuxième section de passage 21. En d'autres termes, la première section 18 définie par la soupape 20 en configuration de décompression est supérieure à la deuxième section de passage 21, laquelle présente alors sa seconde valeur. Cette mesure technique permet un excellent compromis entre deux fonctions fondamentales, savoir la rapidité de décompression d'une part qui permet à l'utilisateur d'ouvrir rapidement son appareil 1 et la sécurité d'utilisation d'autre part qui évite toute projection dangereuse de matière alimentaire et/ou de liquide brûlant. En effet, la section réduite (deuxième valeur de la deuxième section de passage 21) délimitée par le deuxième tronçon 23B et l'orifice 17 limite le débit de fuite de vapeur de manière suffisante pour limiter l'apparition d'un phénomène d'éjection d'eau et/ou d'aliments (phénomène de « *moussage* » également désigné sous l'appellation « *émulsion* »)*,* tandis que la première section 18 présente alors une valeur prédéterminée importante, supérieure à celle de la deuxième section 21, choisie pour autoriser néanmoins une chute de pression rapide.

Dans le cas correspondant aux modes de réalisation illustrés aux figures, où l'organe de réglage 19 de la pression comprend une soupape 20, cette dernière comprend avantageusement une tête 24, laquelle est de préférence montée sur et à l'extrémité d'une tige de soupape 25, laquelle est elle-même préférentiellement montée à coulissement axial selon l'axe Y-Y' dans le module 5. La tête 24 s'étend préférentiellement de manière sensiblement perpendiculaire à l'axe Y-Y' et présente avantageusement une forme générale discoïde, comme cela est illustré aux figures. Avantageusement, la soupape 20 comprend également un joint d'étanchéité annulaire 26 s'élevant à partir de la tête 24, de préférence à la périphérie de cette dernière. Ce joint d'étanchéité 26 est destiné, lorsque la soupape 20 obture la première section de passage 18 (illustrée à la figure 5), à venir en appui sensiblement étanche contre l'enceinte de cuisson, c'est-à-dire en l'occurrence contre la face externe 3B du couvercle 3, de façon à entourer l'orifice 17 et empêcher ainsi la mise en communication de l'intérieur de l'enceinte avec l'extérieur, puisque l'orifice 17 débouche alors dans une chambre fermée par le joint d'étanchéité 26 et la tête 24.

De préférence, le joint d'étanchéité 26 vient de matière avec la tête 24, c'est-à-dire qu'il ne forme avec cette dernière qu'une seule et même pièce d'un seul tenant, ladite pièce venant coiffer la tige 25.

De façon préférentielle, tel que cela est illustré aux figures, le corps allongé 23 s'élève lui aussi à partir de la tête 24 de la soupape 20, selon la direction axiale X-X'.

De façon particulièrement avantageuse, tel que cela est illustré aux figures, le corps allongé 23, la tête 24 et le joint d'étanchéité 26 sont formés par une seule et même pièce d'un seul tenant, laquelle est de préférence un capuchon en matériau élastomère, par exemple du genre silicone, destiné à être emboîté à force sur la tige 25.

La tige 25 est quant à elle avantageusement soumise à l'action de rappel axial d'un ressort 27. Tel que cela est bien connu en tant que tel, le ressort 27 plaque en permanence le joint d'étanchéité 26 de la tête 24 contre la face externe 3B du couvercle 3, qui forme ainsi un siège pour la soupape 20, lorsque l'organe de réglage 19 est en configuration de régulation. Lorsque la pression régnant à l'intérieur de l'enceinte est suffisante pour surmonter la force de rappel exercée par le ressort 27, la soupape 20 se soulève, dégageant ainsi la première section de passage 18, ce qui permet de réguler automatiquement la pression.

Le passage de l'organe de réglage 19 en configuration de décompression correspond à l'exercice d'un effort opposé et supérieur à l'effort de rappel exercé par le ressort 27, de façon à maintenir la première section de passage 18 dégagée, quel que soit le niveau de pression régnant dans l'enceinte, pour permettre la décompression de cette dernière.

Avantageusement, le rapport de la première valeur de la deuxième section de passage 21 sur la deuxième valeur de la deuxième section de passage 21 est sensiblement compris entre 1,05 et 2,5, et de façon encore plus préférentielle entre 1,5 et 2. La mise en oeuvre de tels rapports de section permet l'obtention d'un excellent compromis entre la sensibilité de régulation d'une part et la vitesse et la sécurité de décompression d'autre part.

De façon préférentielle, la première valeur de la deuxième section de passage 21 est sensiblement comprise entre 10 et 15 mm², et de façon encore plus préférentielle, sensiblement égale à 12,4 mm², tandis que la deuxième valeur de la deuxième section de passage 21 est préférentiellement sensiblement comprise entre 5 et 9 mm², et de façon encore plus préférentielle est sensiblement égale à 7,1 mm².

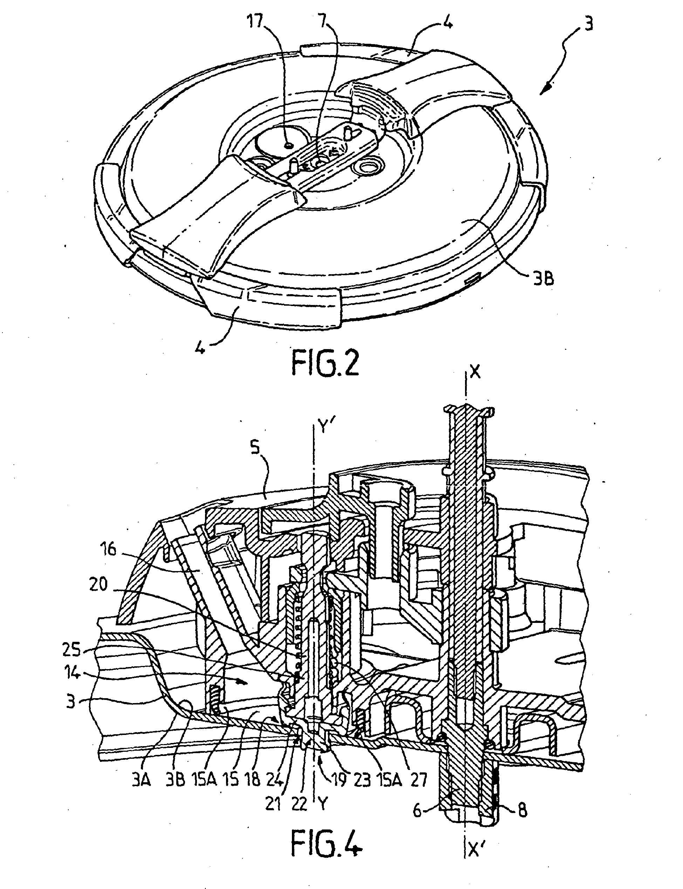

Le fonctionnement d'un appareil de cuisson 1 selon l'invention, conforme au mode de réalisation illustré aux figures 1 à 6, va être décrit dans ce qui suit.

L'utilisateur rapporte tout d'abord le module 5 sur le couvercle 3, en enfilant l'axe fileté 6 dans le trou 7 correspondant ménagé dans le couvercle 3 et en fixant le module 5 à l'aide de l'écrou de blocage 8 vissé sur l'axe fileté 6. Dans cette configuration, le joint annulaire 15A vient en appui étanche contre la face externe 3B du couvercle 3, réalisant ainsi, en coopération avec l'orifice 17, le conduit 14. Le positionnement du module 5 sur le couvercle 3 entraîne également la pénétration du corps allongé 23 dans l'orifice 17, coaxialement à ce dernier de manière à définir une deuxième section de passage 21 en forme de couronne circulaire.

L'utilisateur dispose au sein de la cuve 2 les aliments à cuire, au besoin à l'aide d'un panier de cuisson (non représenté) disposé au sein de la cuve 2. L'utilisateur rapporte ensuite le couvercle 3 équipé de son module de commande 5 sur la cuve 2 et procède au verrouillage de l'appareil 1 à l'aide des mâchoires 4, le déplacement radial de ces dernières étant commandé par les boutons 9, 10.

A l'aide d'un sélecteur rotatif 28, l'utilisateur agit ensuite sur la position axiale de la soupape 20. L'utilisateur amène ainsi la soupape dans sa configuration de régulation illustrée à la figure 5. L'appareil 1 illustré aux figures peut comprendre plusieurs sous-configurations de régulation indexées, chacune de ces sous-configurations de régulation correspondant à un tarage différent de la soupape 20, réalisé en comprimant plus ou moins le ressort 27.

L'appareil 1 est alors soumis à la chaleur d'une plaque de cuisson sur laquelle il repose. La chaleur dégagée par la plaque de cuisson est transmise, par l'intermédiaire du fond 2A, aux aliments disposés à l'intérieur de l'enceinte de cuisson formée par l'assemblage de la cuve 2 et du couvercle 3. Sous l'effet de cet apport de chaleur, la pression régnant à l'intérieur de l'enceinte augmente. Dès que cette pression devient supérieure à un niveau prédéterminé, correspondant au tarage du ressort 27, la tête 24 et le joint 26 s'éloignent de la face externe 3B du couvercle, ce qui entraîne une fuite de vapeur vers l'extérieur permettant ainsi la régulation automatique de la pression. Ce flux de fuite de vapeur emprunte tout d'abord la deuxième section de passage 21, puis passe par la première section de passage 18 située à l'aval de la deuxième section 21 dans le sens du flux, traverse ensuite la chambre 15 puis s'échappe enfin par le tuyau d'évacuation 16. Afin d'obtenir une grande sensibilité de régulation, c'est-à-dire de bénéficier d'une soupape 20 très réactive au changement de pression au sein de l'enceinte, il est avantageux de prévoir une surface de portée, c'est-à-dire une surface d'échange de pression entre la soupape 20 et l'intérieur de l'enceinte, la plus grande possible. A cette fin, la tête 24, dont le diamètre conditionne directement la surface de portée, présente un diamètre important, par exemple un diamètre au niveau du joint d'étanchéité 26 de 10,5 mm, soit 33 mm de périmètre. Lorsque la soupape 20 est en configuration de régulation, comme cela est illustré à la figure 5, la deuxième section de passage 21 est relativement importante, et par exemple sensiblement égale à 12,4 mm², de manière à permettre un excellent échange de pression entre l'intérieur de l'enceinte et la surface d'échange constituée par la tête 24. Par exemple, l'orifice 17 présente avantageusement un diamètre de 6 mm, tandis que le premier tronçon 23A du corps allongé 23 présente un diamètre sensiblement égal à 4,5 mm.

A la fin du cycle de cuisson, l'utilisateur peut procéder à la décompression de l'appareil en amenant le sélecteur 28 dans une position indexée de décompression, ce qui entraîne l'exercice d'un effort axial contraire et supérieur à l'effort de rappel exercé par le ressort 27. Cela permet de soulever la soupape 20 d'une hauteur prédéterminée, suffisante pour assurer une perte de contact du joint d'étanchéité 26 avec la face externe 3B du couvercle 3, libérant ainsi la première section 18 et amenant le deuxième tronçon 23B en coopération avec l'orifice 17 pour conférer à la deuxième section 21 sa deuxième valeur. Afin de garantir l'intégralité de la décompression, la soupape 20 sera écartée le plus possible de son siège formé par la face externe 3B du couvercle 3, c'est-à-dire que l'espace interstitiel entre la face externe 3B du couvercle 3 et le joint 26 issu de la tête 24 sera le plus important possible, sa valeur étant choisie en fonction de la deuxième valeur de la section 21 pour obtenir un débit maximal sans entraîner de projection de matière alimentaire et/ou d'eau brûlante vers l'extérieur, par le conduit 14. De façon préférentielle, le deuxième tronçon 23B présente un diamètre sensiblement égal à 5,2 mm, délimitant ainsi avec l'orifice 17 (dont le diamètre est préférentiellement égal à sensiblement 6 mm) une deuxième section de passage 21 présentant une deuxième valeur sensiblement égale à 7,1 mm².

Des essais réalisés en laboratoire par la demanderesse, avec la configuration géométrique illustrée aux figures et décrites dans ce qui précède (diamètre de la tête 24 jusqu'au joint 26 : 10,5 mm ; diamètre de l'orifice 17 : 6 mm ; diamètre du premier tronçon 23A : 4,5 mm, diamètre du deuxième tronçon 23B : 5,2 mm) ont permis de quantifier l'effet technique de l'invention.

Les essais en question ont été menés avec un appareil 1 avec une cuve de capacité égale à six litres, remplie à mi-capacité et placé sur une plaque de chauffage électrique en fonte dont la puissance est de 1,5 KW.

Dans ces conditions, la décompression de l'appareil 1, une fois ce dernier retiré de la plaque de chauffage, s'effectue en 16 secondes pour passer d'une pression interne de 80 kPa à une pression interne de 40 kPa lorsque la deuxième section 21 est égale à 12,4 mm², alors qu'il faut 26 secondes lorsque cette section est égale à 7,1 mm², toutes choses étant égales par ailleurs.

De même, la finesse de régulation, qui correspond à l'écart entre la valeur de déclenchement (c'est-à-dire d'ouverture de la première section 18) de la soupape 20 et la valeur maximale de régulation est de 4 kPa lorsque la première section est sensiblement égale à 12,4 mm², alors qu'elle est sensiblement égale à 6 kPa lorsque ladite deuxième section 21 est sensiblement égale à 7,1 mm², toutes choses étant égales par ailleurs.

La mise en oeuvre d'un réglage de la deuxième section 21 permettant l'accroissement de cette dernière lorsque le moyen de réglage de la pression 19 passe de sa configuration de régulation à sa configuration de décompression et réciproquement permet ainsi, dans l'exemple précité, de ralentir la décompression selon un gain d'environ 62 % (ce qui permet d'éviter la projection dangereuse de matière alimentaire et/ou d'eau tout en restant dans une durée de décompression acceptable pour l'utilisateur) et d'obtenir un gain d'environ 50 % en matière de sensibilité de régulation.

L'exemple précité met également en lumière l'intérêt considérable que présente l'invention pour la fabrication en grande série, de manière économique, d'appareils de cuisson fiables.

En effet, si l'on souhaite obtenir une valeur de 7,1 mm² pour la première section de passage 18, afin de réduire la violence de la décompression, le joint 26 devrait être écarté de la face externe 3B du couvercle 3 d'une distance de 0,2 mm (avec un diamètre du joint 26 de 10,5 mm, qui correspond à un périmètre de 33 mm). Les tolérances de fabrication, en particulier dans le cadre d'une fabrication en grande série, ne permettent pas d'obtenir une telle précision d'écartement, de sorte qu'il existerait un risque de décompression violente (si la distance d'écartement s'avère en réalité supérieure à 0,2 mm du fait des tolérances de fabrication) ou d'absence de décompression suffisante (si la distance d'écartement s'avère en réalité inférieure à 0,2 mm du fait des tolérances de fabrication).

L'invention permet au contraire, en pilotant une section 21 située à l'amont de la section 18 réglée par la soupape de régulation, de s'affranchir des contraintes relatives aux tolérances de fabrication, en autorisant un écartement largement supérieur à 0,2 mm sans pour autant favoriser l'apparition de phénomènes d'échappement violent.

## Revendications

1. Appareil (1) de cuisson d'aliments sous pression agencé pour former une enceinte de cuisson, pourvu d'un conduit (14) permettant l'établissement d'un écoulement de fuite de vapeur de l'intérieur de l'enceinte vers l'extérieur et définissant une première section de passage (18) de vapeur, ledit appareil (1) comprenant un organe de réglage (19) de la pression susceptible de présenter d'une part une configuration de régulation, dans laquelle il règle la première section de passage (18) pour maintenir la pression régnant dans l'enceinte à un niveau prédéterminé, et d'autre part une configuration de décompression, dans laquelle il règle la première section de passage (18) pour permettre, indépendamment du niveau de la pression régnant dans l'enceinte, la mise en communication de l'intérieur de l'enceinte avec l'extérieur, ledit conduit (14) définissant en outre une seconde section (21) de passage située à l'amont de la première section (18) dans le sens de l'écoulement de fuite, ledit appareil (1) étant **caractérisé en ce qu'**il comprend un moyen d'ajustement (22) de la deuxième section de passage (21) conçu pour que cette dernière présente, lorsque l'organe de réglage (19) est en configuration de régulation, une première valeur et, lorsque l'organe de réglage est en configuration de décompression, une deuxième valeur sensiblement inférieure à la première valeur.

2. Appareil (1) selon la revendication 1 **caractérisé en ce que** la deuxième section de passage (21) est située sensiblement à l'interface entre l'enceinte et le conduit (14).

3. Appareil (1) selon la revendication 1 ou 2 **caractérisé en ce que** le moyen d'ajustement (22) de la deuxième section de passage (21) est porté par l'organe de réglage (19) de la pression.

4. Appareil (1) selon l'une des revendications 1 à 3 **caractérisé en ce qu'**il comprend un orifice (17) de mise en communication de l'intérieur de l'enceinte avec le conduit (14), le moyen d'ajustement (22) de la deuxième section de passage (21) comprenant lui-même un corps allongé (23) présentant un premier tronçon (23A) et un deuxième tronçon (23B) de section supérieure à celle du premier tronçon (23A), le corps allongé (23) étant monté à coulissement coaxialement audit orifice (17), de façon que lorsque l'organe de réglage (19) est en configuration de régulation, la deuxième section de passage (21), qui présente alors sa première valeur, est définie par la coopération du premier tronçon (23A) et de l'orifice (17), tandis que lorsque l'organe de réglage (19) est en configuration de décompression, la deuxième section de passage (21), qui présente alors sa deuxième valeur, est définie par la coopération du deuxième tronçon (23B) et de l'orifice (17).

5. Appareil (1) selon l'une des revendications 1 à 4 **caractérisé en ce que** l'organe de réglage (19) de la pression comprend une soupape (20) qui :
- lorsque l'organe de réglage (19) est en configuration de régulation : d'une part obture la première section (18) de passage tant que la pression régnant dans l'enceinte est inférieure ou égale audit niveau prédéterminé, et d'autre part libère ladite première section (18) dès que la pression régnant dans l'enceinte dépasse ledit niveau prédéterminé,
- lorsque l'organe de réglage (19) est en configuration de décompression : libère la première section de passage (18).

6. Appareil (1) selon la revendication 5 **caractérisé en ce que** lorsque l'organe de réglage (19) est en configuration de régulation et qu'il libère la première section (18), ladite première section (18) présente une valeur qui n'excède sensiblement pas la première valeur de la deuxième section de passage (21).

7. Appareil (1) selon la revendication 5 ou 6 **caractérisé en ce que** lorsque l'organe de réglage (19) est en configuration de décompression, ladite première section (18) présente une valeur qui excède sensiblement la seconde valeur de la deuxième section de passage (21).

8. Appareil (1) selon l'une des revendications 5 à 7 **caractérisé en ce que** la soupape (20) comprend une tête (24) ainsi qu'un joint d'étanchéité annulaire (26) s'élevant à partir de la tête (24), ledit joint d'étanchéité (26) étant destiné, lorsque la soupape (20) obture la première section (18) de passage, à venir en appui sensiblement étanche contre l'enceinte de cuisson, de façon à entourer l'orifice (17) et empêcher ainsi la mise en communication de l'intérieur de l'enceinte avec l'extérieur.

9. Appareil (1) selon les revendications 3, 4 et 8 **caractérisé en ce que** le corps allongé (23) s'élève à partir de la tête (24) de la soupape (20).

10. Appareil (1) selon la revendication 9 **caractérisé en ce que** le corps allongé (23), la tête (24) et le joint d'étanchéité (26) de la soupape (20) sont formés par une seule et même pièce d'un seul tenant.

11. Appareil (1) selon l'une des revendications 1 à 10 **caractérisé en ce que** le rapport de la première valeur de la deuxième section de passage (21) sur la deuxième valeur de la deuxième section de passage (21) est sensiblement compris entre 1,05 et 2,5 et de préférence entre 1,5 et 2.

12. Appareil (1) selon l'une des revendications 1 à 11 **caractérisé en ce que** la première valeur de la deuxième section de passage (21) est sensiblement comprise entre 10 et 15 mm², tandis que la deuxième valeur de la deuxième section de passage (21) est sensiblement comprise entre 5 et 9 mm².

13. Appareil (1) selon l'une des revendications 1 à 12 **caractérisé en ce qu'**il est constitué par un autocuiseur domestique.

## Claims

1. An appliance (1) for cooking food under pressure, the appliance being arranged to form a cooking enclosure provided with a duct (14) enabling a steam leakage flow to be established from the inside of the enclosure to the outside and defining a first flow section (18) for steam, said appliance (1) including a pressure adjustment member (19) suitable for presenting firstly a regulation configuration in which it adjusts the first flow section (18) so as to maintain the pressure that exists inside the enclosure at a predetermined level, and secondly a decompression configuration in which it adjusts the first flow section (18) to allow the inside of the enclosure to be put into communication with the outside independently of the level of pressure that exists in the enclosure, said duct (14) also defining a second flow section (21) situated upstream from the first flow section (18) in the leakage flow direction, said appliance (1) being **characterized in that** it includes adjustment means (22) for adjusting the second flow section (21) and designed so that said, when the adjustment member (19) is in its regulation configuration, said second flow section presents a first value, and when the adjustment member is in its decompression configuration, said second flow section presents a second value that is substantially smaller than the first value.

2. An appliance (1) according to claim 1, **characterized in that** the second flow section (21) is situated substantially at the interface between the enclosure and the duct (14).

3. An appliance (1) according to claim 1 or claim 2, **characterized in that** the adjustment means (22) for adjusting the second flow section (21) are carried by the pressure adjustment member (19).

4. An appliance (1) according to any one of claims 1 to 3, **characterized in that** it includes an orifice (17) for putting the inside of the enclosure into communication with the duct (14), the means (22) for adjusting the second flow section (21) themselves comprising an elongate body (23) presenting a first segment (23A) and a second segment (23B) of section greater than the section of the first segment (23A), the elongate body (23) being mounted to slide coaxially through said orifice (17) so that when the adjustment member (19) is in its regulation configuration, the second flow section (21), then presenting its first value, is defined by co-operation between the first segment (23A) and the orifice (17), whereas when the adjustment member (19) is in its decompression configuration, the second flow section (21) which then has its second value is defined by co-operation between the second segment (23B) and the orifice (17).

5. An appliance (1) according to any one of claims 1 to 4, **characterized in that** the pressure adjustment member (19) comprises a valve (20) which:
· when the adjustment member (19) is in its regulation configuration: firstly closes the first flow section (18) such that the pressure that exists in the enclosure is less than or equal to said predetermined level, and secondly opens said first section (18) as soon as the pressure that exists in the enclosure exceeds said predetermined level; and
- when the adjustment member (19) is in its decompression configuration: opens the first flow section (18).

6. An appliance (1) according to claim 5, **characterized in that** when the adjustment member (19) is in its regulation configuration, and opens the first section (18), said first section (18) presents a value that does not significantly exceed the first value for the second flow section (21).

7. An appliance (1) according to claim 5 or claim 6, **characterized in that** when the adjustment member (19) is in its decompression configuration, said first section (18) presents a value that is significantly greater than the second value for the second flow section (21).

8. An appliance (1) according to any one of claims 5 to 7, **characterized in that** the valve (20) comprises a head (24) and an annular gasket (26) extending from the head (24), said gasket (26) serving, when the valve (20) closes the first flow section (18), to bear in substantially leaktight manner against the cooking enclosure so as to surround the orifice (17) and thereby prevent the inside of the enclosure being put into communication with the outside.

9. An appliance (1) according to claims 3, 4, and 8, **characterized in that** the elongate body (23) projects from the head (24) of the valve (20).

10. An appliance (1) according to claim 9, **characterized in that** the elongate body (23), the head (24), and the gasket (26) of the valve (2C) are formed by a single one-piece part.

11. An appliance (1) according to any one of claims 1 to 10, **characterized in that** the ratio of the first value for the second flow section (21) over the second value for the second flow section (21) lies substantially in the range 1.05 to 2.5, and preferably in the range 1.5 to 2.

12. An appliance (1) according to any one of claims 1 to 11, **characterized in that** the first value for the second flow section (21) lies substantially in the range 10 mm² to 15 mm², while the second value for the second flow section (21) lies substantially in the range 5 mm² to 9 mm².

13. An appliance (1) according to any one of claims 1 to 12, **characterized in that** it is constituted by a home pressure cooker.

## Patentansprüche

1. Druckkochgerät (1) für Nahrungsmittel, das eingerichtet ist, um einen Gareinschluss zu bilden, versehen mit einer Leitung (14), die das Herstellen eines Dampfleckabflusses vom Inneren des Einschlusses nach außen erlaubt und einen ersten Dampfdurchgangsquerschnitt (18) definiert, wobei das Gerät (1) ein Einstellorgan (19) des Drucks aufweist, das einerseits eine Regelkonfiguration aufweisen kann, bei der es den ersten Durchgangsquerschnitt (18) regelt, um den Druck, der in dem Einschluss herrscht, auf einem vorbestimmten Niveau zu halten, und andererseits eine Druckablasskonfiguration, in der es den ersten Durchgangsquerschnitt (18) regelt, um unabhängig von dem Niveau des Drucks, der in dem Einschluss herrscht, das Herstellen der Kommunikation des Inneren des Einschlusses und der Außenseite zu erlauben, wobei die Leitung (14) ferner einen zweiten Durchgangsquerschnitt (21) definiert, der stromaufwärts des ersten Querschnitts (18) in die Leckfließrichtung liegt, Gerät (1) **dadurch gekennzeichnet, dass** es ein Einstellmittel (22) des zweiten Durchgangsquerschnitts (21) aufweist, das konzipiert ist, so dass dieser Letztere, wenn das Einstellorgan (19) in Regelkonfiguration ist, einen ersten Wert, und, wenn das Einstellorgan in Druckablasskonfiguration ist, einen zweiten Wert, der im Wesentlichen niedriger ist als der erste Wert, aufweist.

2. Gerät (1) nach Anspruch 1, **dadurch gekennzeichnet, dass** der zweite Durchgangsquerschnitt (21) im Wesentlichen an der Schnittstelle zwischen dem Einschluss und der Leitung (14) liegt.

3. Gerät (1) nach Anspruch 1 oder 2, **dadurch gekennzeichnet, dass** das Einstellmittel (22) des zweiten Durchgangsquerschnitts (21) von dem Einstellorgan (19) des Drucks getragen wird.

4. Gerät (1) nach einem der Ansprüche 1 bis 3, **dadurch gekennzeichnet, dass** es eine Öffnung (17) zum Herstellen der Kommunikation des Inneren des Einschlusses mit der Leitung (14) aufweist, wobei das Einstellmittel (22) des zweiten Durchgangsquerschnitts (21) selbst einen länglichen Körper (23) aufweist, der einen ersten Abschnitt (23A) und einen zweiten Abschnitt (23B) mit einem Querschnitt aufweist, der größer ist als der des ersten Abschnitts (23A), wobei der längliche Körper (23) koaxial zu der Öffnung (17) gleitend derart montiert ist, dass, wenn sich das Einstellorgan (19) in Regelkonfiguration befindet, der zweite Durchgangsquerschnitt (21), der dabei seinen ersten Wert aufweist, durch das Zusammenwirken des ersten Abschnitts (23A) und der Öffnung (17) definiert ist, während, wenn sich das Einstellorgan (19) in Druckablasskonfiguration befindet, der zweite Durchgangsquerschnitt (21), der dabei seinen zweiten Wert aufweist, von dem Zusammenwirken des zweiten Abschnitts (23B) und der Öffnung (17) definiert ist.

5. Gerät (1) nach einem der Ansprüche 1 bis 4, **dadurch gekennzeichnet, dass** das Einstellorgan (19) des Drucks ein Ventil (20) aufweist, das:
- wenn sich das Einstellorgan (19) in der Regelkonfiguration befindet: einerseits den ersten Durchgangsquerschnitt (18) so lange verschließt, wie der Druck, der in dem Einschluss herrscht, niedriger oder gleich dem vorbestimmten Niveau ist, und andererseits den ersten Querschnitt (18) freigibt, sobald der Druck, der in dem Einschluss herrscht, das vorbestimmte Niveau überschreitet,
- wenn sich das Einstellorgan (19) in Druckablasskonfiguration befindet, den ersten Durchgangsquerschnitt (18) freigibt.

6. Gerät (1) nach Anspruch 5, **dadurch gekennzeichnet, dass** das Einstellorgan (19), wenn es sich in Regelkonfiguration befindet und den ersten Querschnitt (18) freigibt, der erste Querschnitt (18) einen Wert aufweist, der im Wesentlichen den ersten Wert des zweiten Durchgangsquerschnitts (21) nicht überschreitet.

7. Gerät (1) nach Anspruch 5 oder 6, **dadurch gekennzeichnet, dass** der erste Querschnitt (18) wenn sich das Einstellorgan (19) in Druckablasskonfiguration befindet, einen Wert aufweist, der den zweiten Wert des zweiten Durchgangsquerschnitts (21) wesentlich überschreitet.

8. Gerät (1) nach einem der Ansprüche 5 bis 7, **dadurch gekennzeichnet, dass** das Ventil (20) einen Kopf (24) sowie eine ringförmige Dichtung (26), die ausgehend von dem Kopf (24) aufragt, umfasst, wobei die Dichtung (26) dazu bestimmt ist, im Wesentlichen dicht gegen den Gareinschluss zum Aufliegen zu kommen, wenn das Ventil (20) den ersten Durchgangsquerschnitt (18) verschließt, so dass sie die Öffnung (17) umgibt und damit das Herstellen der Kommunikation zwischen dem Inneren des Einschlusses und der Außenseite verhindert.

9. Gerät (1) gemäß den Ansprüchen 3, 4 und 8, **dadurch gekennzeichnet, dass** der längliche Körper (23) ausgehend von dem Kopf (24) des Ventils (20) aufragt.

10. Gerät (1) nach Anspruch 9, **dadurch gekennzeichnet, dass** der längliche Körper (23), der Kopf (24) und die Dichtung (26) des Ventils (20) aus einem einzigen Stück ausgebildet sind.

11. Gerät (1) nach einem der Ansprüche 1 bis 10, **dadurch gekennzeichnet, dass** das Verhältnis des ersten Werts des zweiten Durchgangsquerschnitts (21) zum zweiten Wert des zweiten Durchgangsquerschnitts (21) im Wesentlichen zwischen 1,05 und 2,5 und vorzugsweise zwischen 1,5 und 2 liegt.

12. Gerät (1) nach einem der Ansprüche 1 bis 11, **dadurch gekennzeichnet, dass** der erste Wert des zweiten Durchgangsquerschnitts (21) im Wesentlichen zwischen 10 und 15 mm² liegt, während der zweite Wert des zweiten Durchgangsquerschnitts (21) im Wesentlichen zwischen 5 und 9 mm² liegt.

13. Gerät (1) nach einem der Ansprüche 1 bis 12, **dadurch gekennzeichnet, dass** es aus einem Haushaltsdruckkochtopf besteht.
